# FASCICULE DE BREVET EUROPEEN

(11) **EP 2 171 830 B1**
(45) Date de publication et mention de la délivrance du brevet: **01.05.2019**
(21) Numéro de dépôt: 08826457.7
(22) Date de dépôt: 04.07.2008
(51) Int. Cl.: H02K 3/28, H02K 9/06, H02K 11/04

(54) **STATOR POLYPHASÉ À VENTILATION INTERNE ET MACHINE ELECTRIQUE COMPORTANT UN TEL STATOR**
MEHRPHASIGER STATOR FÜR EINE INTERN BELÜFTETE ELEKTRISCHE, ROTIERENDE MASCHINE UND ELEKTRISCHE, ROTIERENDE MASCHINE MIT DERARTIGEM STATOR
POLYPHASE STATOR FOR AN INTERNALLY VENTILATED ROTATING ELECTRICAL MACHINE, AND ROTATING ELECTRICAL MACHINE COMPRISING SUCH A STATOR

(30) Priorité: 11.07.2007 FR 0756432
(43) Date de publication de la demande: 07.04.2010
(73) Titulaire: Valeo Equipements Electriques Moteur, 94046 Créteil Cedex (FR)
(72) Inventeur: DUNESME, Xavier, F-91330 Yerres (FR); FOURNIER, Jérôme, F-62200 Boulogne Sur Mer (FR); LANGLARD, Nicolas, F-59120 Loos (FR); FAVEROLLE, Pierre, F-91230 Montgeron (FR)
(74) Mandataire: de Lambilly Delorme, Marie Pierre
(86) Numéro de dépôt international: PCT/FR2008/051244
(87) Numéro de publication internationale: WO 2009/010671

(56) Documents cités:
- EP-A- 1 220 419
- WO-A-92/06527
- DE-A1-102005 061 892
- FR-A- 2 847 739
- US-B1- 6 501 205
- US-B1- 6 943 477
- US-B1- 7 075 206

## Description

### Domaine de l'invention

La présente invention se rapporte à un stator polyphasé pour machine électrique tournante à ventilation interne, notamment un alternateur ou un alterno-démarreur de véhicule automobile.

La présente invention se rapporte également à une machine électrique tournante à ventilation interne comportant un tel stator.

### Etat de la technique.

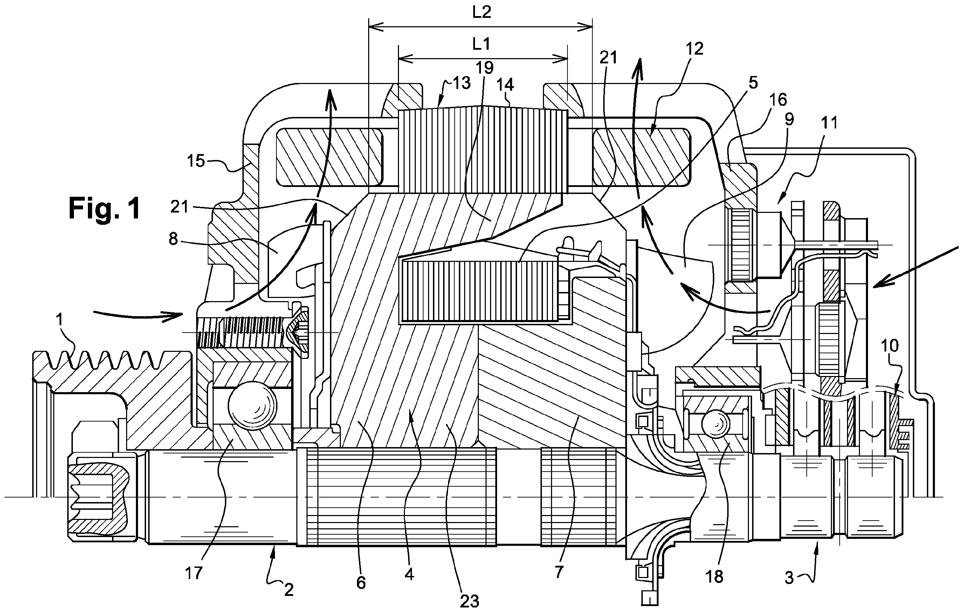

On connaît des documents DE 10 2005 061892 A1, WO 92/06527 A, US 6 501 205 B1, US 6 943 477 B1, et US 7 075 206 B1, des stators polyphasés.
Un tel stator polyphasé et une telle machine à ventilation interne sont décrits dans la figure 1, qui est une demi vue en coupe axiale d'un alternateur polyphasé à ventilation interne de véhicule automobile à moteur thermique, et par exemple dans le document EP 0 515 259 auquel on se reportera.
L'alternateur comporte un carter portant un stator 13 entourant un rotor 4 de forme annulaire, ici à griffes, solidaire d'un arbre 2 monté rotatif dans le carter. L'axe de l'arbre 2 constitue l'axe de rotation de l'alternateur polyphasé.
Le carter comporte au moins un palier avant 15 et un palier arrière 16 métalliques portant chacun centralement un roulement à billes, respectivement 17 et 18, pour montage rotatif de l'arbre 2 du rotor 4.
Les paliers sont assemblés entre eux par exemple à l'aide de tirants comme visible dans la figure 1 du document EP 0 515 259 montrant également les pattes de fixation du carter à une partie fixe du véhicule.
Le rotor 4 comporte deux roues polaires 6, 7 à griffes, ici en acier ferromagnétique, et un bobinage d'excitation 5 monté entre les roues 6, 7. L'arbre 2 est assemblé ici avec les roues polaires 6, 7 par emmanchement à force. Cet arbre 2 présente des portions moletées à cet effet.

Le stator comporte un corps 14, sous la forme d'un paquet de tôles, comportant chacune une pluralité d'encoches en correspondance les unes avec les autres. Ce corps 14, ici de forme annulaire, porte un bobinage 12 de stator polyphasé, qui traverse le corps 14 à la faveur des encoches de celui-ci et s'étend en saillie de part et d'autre du corps 14 pour former une première et une deuxième extrémités de bobinage appelées chignons.
Le bobinage 12 comporte des segments conducteurs, en variante est à fil continu. Ces conducteurs présentent une âme en matériau électriquement conducteur, généralement du cuivre en variante de l'aluminium, recouverte par au moins une couche électriquement isolante, telle que de l'émail. On prévoit un isolant électrique pour chaque encoche afin d'isoler électriquement le bobinage 12 du corps 14 et pour ne pas blesser la couche isolante du bobinage 12 lors du montage de celui-ci dans les encoches du corps 14.

Le bobinage 12 comporte plusieurs enroulements. Ce nombre est fonction du nombre de phases de l'alternateur et donc du stator.
Chaque phase du stator comporte au moins un enroulement.
Les extrémités du bobinage 5 du rotor sont reliées par des liaisons filaires à des bagues collectrices (non référencées) solidaires de l'extrémité arrière de l'arbre 2 et appartenant à un collecteur 3. Des balais (non référencés) sont admis à frotter sur les bagues. Ces balais sont portés par un porte balais 10 (représenté partiellement à la figure 1) solidaire d'un régulateur de tension. Dans un autre mode réalisation le bobinage d'excitation 5 est fixe, l'alternateur étant sans balais et sans bague collectrice.

L'extrémité avant de l'arbre 2 porte un organe d'entraînement 1 appartenant à une transmission de mouvement entre l'arbre 2 et le vilebrequin du moteur thermique du véhicule. Cet organe 1 consiste ici en une poulie appartenant à une transmission de mouvement comportant au moins une courroie intervenant entre deux poulies. En variante la transmission est à chaînes ou à engrenages. Les extrémités des enroulements des phases du stator sont reliées à un dispositif de redressement de courant 11. Un capot de protection (non référencé) coiffe le dispositif de redressement et est solidaire du palier arrière.

Le capot et les paliers 15, 16 sont ici ajourés pour circulation d'un fluide de refroidissement, tel que de l'air, à l'intérieur du carter de la machine. A la figure 1 on a représenté par des flèches le trajet du fluide de refroidissement, ici de l'air,à l'intérieur de l'alternateur et à travers les différentes ouvertures d'entrée d'air et de sortie d'air des palier 15, 16. Cette circulation de l'air permet de refroidir les chignons du bobinage 12 du stator 13, ainsi que le dispositif de redressement de courant 11 et le régulateur de tension.
Ici les paliers 15, 16 ont une forme creuse et comportent chacun un fond, globalement d'orientation transversale par rapport à l'axe de l'arbre 2. Ce fond est prolongé à sa périphérie externe par un rebord globalement d'orientation axiale par rapport à l'axe de l'arbre 2. Le fond du palier arrière 16, et ici également du palier avant 15, comporte des ouvertures d'entrée d'air dont une est visible à la figure 1. Ces ouvertures ont généralement une forme globalement trapézoïdale. Les rebords des paliers 15, 16 présentent des ouvertures de sortie d'air. Ces ouvertures ont axialement une forme oblongue et affectent également la périphérie externe du fond du palier concerné pour des raisons de démoulage, les paliers 15, 16 étant par exemple à base d'aluminium. Cette circulation de l'air est réalisée à l'aide d'au moins un ventilateur. Ce ventilateur est dans un mode de réalisation un ventilateur du type centrifuge solidaire du rotor. Ce ventilateur comporte des pales saillantes solidaires d'un flasque fixé sur le rotor, par exemple par soudage par points.
Ici le rotor 4 porte à chacune de ses extrémités axiales respectivement un ventilateur avant 8 et un ventilateur arrière 9, plus puissant que le ventilateur avant 8 car il doit refroidir le dispositif de redressement de courant 11, ainsi que le régulateur de tension. Ce ventilateur arrière, en variante comporte deux ventilateurs superposés pour augmenter le nombre de pales.

Ainsi qu'on le sait lorsque le bobinage d'excitation 5 du rotor 4 est alimenté électriquement et que l'arbre du rotor tourne, le rotor est magnétisé et un courant alternatif induit est engendré dans le bobinage 12 du stator 13.

Ce courant induit est redressé en un courant continu par le dispositif de redressement 11 pour notamment recharger la batterie du véhicule et alimenter les consommateurs du réseau de bord du véhicule en courant continu.
La circulation de l'air engendré par la rotation du ou des ventilateurs permet de refroidir le dispositif de redressement 11 ainsi que le bobinage 12 du stator 13.

Le dispositif de redressement de courant 11 est porté par le fond du palier arrière et comporte ici des diodes montées tête bêche dont le nombre dépend du nombre des enroulements du bobinage 12.
Ce dispositif 11 consiste ici en un pont redresseur qui comporte :
- une pluralité de diodes positives supportées par un support positif métallique destiné à être relié à la borne positive de la batterie ;
- une pluralité de diodes négatives supportées par le fond du palier arrière relié à la masse ;
- un connecteur pour relier les queues des diodes aux sorties des phases du stator et isoler le support positif par rapport au palier arrière.
Le connecteur comporte un corps en matière plastique dans lequel sont noyées des traces des liaisons avec les diodes pour formation des bras du pont.
En variante le dispositif 11 comporte des transistors du type MOSFET, notamment lorsque l'alternateur est réversible et fonctionne également en mode moteur électrique notamment pour démarrer le moteur thermique du véhicule Cet alternateur réversible est appelé alterno-démarreur. Pour plus de précisions on se reportera par exemple au document FR 2 745 445.
Les roues polaires 6, 7 du rotor 4 comporte chacune, comme dans le document EP 0 515 259 et comme visible à la figure 2 qui est une vue en perspective du rotor 4 , un flasque 22 d'orientation transversale portant à sa périphérie externe des griffes. Chaque griffe comporte à sa périphérie interne une partie transversale d'enracinement 20 au flasque 22 et à sa périphérie externe des dents 19 d'orientation axiale et de forme trapézoïdale. Les dents 19 d'une roue 6, 7 sont dirigées vers le flasque de l'autre roue 7,6. Un décalage circonférentiel est réalisé entre les dents des roues, qui sont imbriquées. Des parties chanfreinées 21 relient chaque dent 19 à sa partie d'enracinement 20.

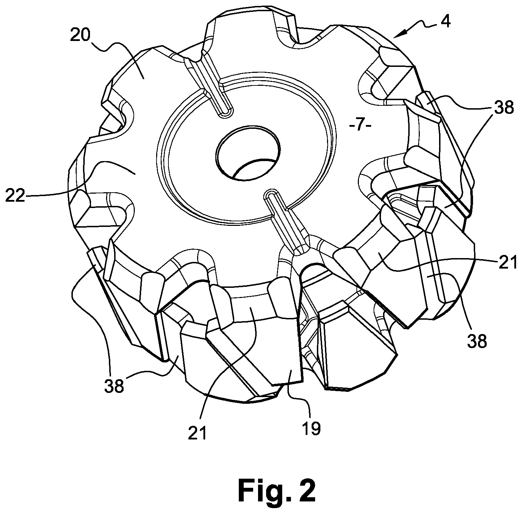

Les flasques 22 présentent chacun une surépaisseur annulaire 23. Ces deux surépaisseurs forment un noyau pour le montage du bobinage d'excitation 5. En variante le noyau est monobloc et est distinct des flasques des roues 6, 7.
Des aimants permanents 38 peuvent être intercalés au moins entre certaines dents 19 pour augmenter la puissance de l'alternateur.
Les aimants 38 sont montés par paires.
Lorsque le rotor est magnétisé, de manière connue, chaque dents définie un pôle magnétique Nord ou Sud.
Le nombre d'encoches du corps 14 du stator 13 dépend du nombre de dents 19 et du nombre d'enroulements du bobinage 12.
Ainsi dans le cas d'un alternateur triphasé à 12 pôles, chaque roue 6, 7 comporte six dents 19 et le corps 14 du stator 36 encoches. Dans le cas d'un alternateur hexaphasé ou d'un alternateur triphasé comportant deux enroulements par phase, chaque roue polaire comporte six dents et le corps du stator 72 encoches.
Pour un rotor à 12 dents et un alternateur du type pentaphasé, le nombre d'encoches sera de 60.
Pour un rotor à 14 dents le corps du stator triphasé comportera 42 encoches. Le rotor peut également comporter 16 pôles comme à la figure 2.
Le nombre d'encoches du corps 14 dépend donc des applications.

Un faible entrefer existe entre la périphérie interne du corps 14 du stator 13, et la périphérie externe du rotor constituée par la périphérie externe des dents 19. Dans cette figure la longueur L1 du corps 14 est inférieure à la distance axiale L2 entre les deux extrémités de deux dents adjacentes appartenant chacune à une roues 6, 7. Ces extrémités sont délimitées par les parties chanfreinées 21. Dans les alternateurs conventionnels de véhicule automobile le diamètre externe du corps du stator varie entre 110 et 150 mm. Le diamètre externe du rotor varie entre 78 mm et 112 mm. La longueur du corps du stator varie entre 26 mm et 42 mm. Cette variation de la longueur du corps 14 permet de faire varier la puissance de la machine. La longueur L1 du corps 14 dépend de celle de la longueur du bobinage d'excitation 5. Pour les alternateurs de faible puissance la longueur L1 est inférieure à celle du bobinage 5, le rapport des longueur étant supérieur ou égal à 0,8. Pour des alternateurs de plus forte puissance la longueur L1 est supérieure à celle du bobinage 5. Ce rapport est dans certains cas supérieur à 1,2 comme dans le document EP 0539339.
Cela a de l'influence sur la longueur de l'alternateur ou de l'alterno-démarreur. Il est donc souhaitable de dimensionner la longueur des chignons du bobinage 12 de telle manière que celle-ci puisse convenir à des longueurs de corps de stator différentes.
Il est également souhaitable de pouvoir notamment augmenter la longueur du corps 14 du stator tout en restant dans le même encombrement déterminé par la longueur entre les fonds des deux paliers 15, 16.
Il est encore souhaitable de pouvoir diminuer la longueur des chignons lorsque le corps 14 est plus court ou de même longueur pour réduire la quantité de matière du bobinage 12.
Un problème se pose alors car plus on diminue la longueur du chignon, plus l'air a des difficultés à traverser les chignons du bobinage 12, qui deviennent alors de plus en plus imperméable.

### Résumé de l'invention

La présente invention a pour objet de concilier ces deux exigences contradictoires.

Suivant l'invention un stator du type sus-indiqué, comprenant un corps doté d'encoches, le diamètre externe du corps étant compris entre 110 et 150 mm, et portant un bobinage de stator comportant au moins un enroulement par phase, chaque enroulement comportant deux fils continus (40) en parallèle, chaque enroulement comprenant :
- une pluralité de paires de branches latérales en regard l'une de l'autre et destinées à être montées chacune dans une encoche du corps du stator ;
- une pluralité de têtes de liaison s'étendant à l'extérieur et d'un premier côté du corps du stator pour former un premier chignon et relier entre elles les premières extrémités de chaque paire de branches latérales ;
- une pluralité de pieds de raccordement décalée circonférentiellement par rapport à la pluralité de têtes de liaison et s'étendant à l'extérieur et d'un deuxième côté du corps du stator pour former un second chignon et relier entre elles les secondes extrémités de chaque paire de branches latérales,
   est caractérisé en ce que au moins l'une des pluralités de têtes de liaison et de pieds de raccordement a une forme globalement pointue, constituée de deux côtés d'un triangle à sommet arrondi, le troisième côté du triangle étant délimité globalement par le corps, et en ce que la longueur axiale de cette pluralité est comprise entre 15 et 20 mm.

Une machine électrique tournante à ventilation interne, notamment un alternateur ou un alterno-démarreur de véhicule automobile, est caractérisée en ce qu'elle comporte un tel stator polyphasé.

Grâce à l'invention on réduit la résistance du bobinage du stator et l'air passe au travers des chignons de manière satisfaisante pour un bon refroidissement du stator et notamment du bobinage de celui-ci.

Un bon compromis est trouvé entre la longueur axiale ou hauteur du chignon, qui est de hauteur réduite, et la perméabilité du chignon. On optimise la surface d'échange air-chignon.

La hauteur réduite du chignon permet de réduire la longueur axiale du bobinage et donc la résistance de celui-ci. On augmente ainsi le débit de la machine qui est fonction de la résistance (la tension étant égale au produit de l'intensité par la résistance- U=RI). La solution est également économique puisque l'on réduit la longueur du bobinage.

On appréciera que la solution permet l'utilisation d'enroulements bobinés dans les encoches du corps du stator selon un pas polaire.
Ainsi dans un mode de réalisation le bobinage est du type ondulé et réparti; les têtes de liaison, les pieds de raccordement et les branches latérales étant décalés d'un pas polaire.

On appréciera que l'on peut également augmenter la longueur du corps du stator, par exemple celui de la figure 1, tout en restant dans le même encombrement de la machine du fait que la longueur axiale ou hauteur du chignon est diminuée.
On peut également diminuer la longueur axiale du corps du stator puisque le débit de la machine est augmenté.
La solution selon l'invention est d'une grande flexibilité.

Dans un mode de réalisation les deux chignons présentent les caractéristiques selon l'invention.

Dans un mode de réalisation les deux chignons ont la même longueur.

Dans un autre mode de réalisation les chignons ont des longueurs différentes selon les applications.
Par exemple le chignon arrière est dans un mode de réalisation plus long axialement que le chignon avant.

Dans une forme de réalisation l'un au moins des chignons présente une tête globalement en forme de V symétrique. Cette disposition donne le meilleur résultat du compromis selon l'invention entre la résistance et la perméabilité du bobinage.

Dans un mode de réalisation le bobinage du stator est à fil continu.

Dans un mode de réalisation le fil est de section ronde pour des raisons économiques.

Dans un autre mode de réalisation le fil est de section globalement rectangulaire, avantageusement carrée, pour un meilleur taux de remplissage des encoches.

Ces encoches, du type semi- ouvert, sont dans un mode de réalisation de section rectangulaire pour un bon rangement des fils.

Dans un mode de réalisation le bobinage est réalisé avec deux fils en parallèles en sorte que chaque fil puisse être introduit par la fente de l'encoche.

Dans un autre mode de réalisation le bobinage du stator est réalisé avec des segments conducteurs de section ronde, ou en variante rectangulaire voir carrée.

Chaque encoche reçoit dans un mode de réalisation deux couches de deux segments conducteurs.

Dans un mode de réalisation le bobinage à fil continu est réalisé spire par spire, une série de spires comprenant une spire de chaque enroulement.
Cette disposition permet de réduire les interférences entre les fils ou les segments conducteurs, ainsi qu'une meilleur répartition thermique au niveau des enroulements qui sont ventilés de manière homogène.

Tous ces modes de réalisation présentent des caractéristiques à considérer isolément ou en combinaison.

D'autres caractéristiques et avantages apparaîtront à la lumière de la description qui va suivre en référence aux figures annexées.

### Brève description des figures

- la figure 1 est une demi vue en coupe axiale d'un alternateur polyphasé de l'art antérieur à ventilation interne pour véhicule automobile à moteur thermique ;
- la figure 2 est une vue en perspective d'un rotor à griffes de l'art antérieur équipé d'aimants permanents ;
- la figure 3 est une vue en perspective d'un stator selon un premier exemple de réalisation de l'invention ;
- la figure 4 est une vue partielle d'une encoche du stator équipé d'un bobinage selon la figure 1 ;
- la figure 5 est une vue partielle de la figure 3 montrant le corps du stator équipé d'une partie des enroulements du bobinage de la figure 3 ;
- la figure 6 est une vue de face de la figure 5 ;
- la figure 7 est une vue simplifiée d'un tronçon d'un enroulement du stator selon l'invention ;
- la figure 8 est une vue partielle analogue à la figure 6 pour un deuxième mode de réalisation de l'invention ;
- la figure 9 est une vue analogue à la figure 7 pour un troisième mode de réalisation de l'invention ;
- la figure 10 est un diagramme montrant la courbe caractéristique de la perméabilité en fonction de la hauteur d'un chignon et donc de la surface d'échange thermique.

### Description de modes de réalisation de l'invention.

Dans la description qui va suivre les éléments identiques ou similaires seront affectés des mêmes signes de références et le chignon arrière du stator est le chignon destiné à être relié au dispositif de redressement de courant.

Il est recherché, selon l'invention, un compromis entre la hauteur ou longueur axiale de l'un au moins des chignons et la perméabilité de ce chignon, c'est-à-dire la capacité du chignon à laisser passer de l'air. Cette capacité est liée aux trous présents dans le chignon. On recherche à optimiser la surface d'échange entre l'un au mois des chignons et l'air.

Pour mémoire on rappellera que ce chignon a une fonction de refroidissement. Plus on diminue la température du stator plus on diminue les pertes par effet Joule et on augmente la puissance de la machine électrique tournante.

De même plus on augmente la hauteur du chignon plus on favorise le passage de l'air et le refroidissement du chignon. En même temps on augmente la résistance du bobinage du stator et donc les pertes.

On recherche à réduire le plus possible la hauteur du chignon tout en ayant un bon passage d'air et une bonne surface d'échange thermique. Une solution optimale est donc recherchée.

Le stator polyphasé est destiné à équiper une machine électrique tournante polyphasée à ventilation interne, tel qu'un alternateur ou un alterno-démarreur à ventilation interne associé à un moteur thermique. Ce moteur thermique est dans un mode de réalisation fixe. Dans un autre mode de réalisation le moteur thermique est un moteur thermique de véhicule automobile.

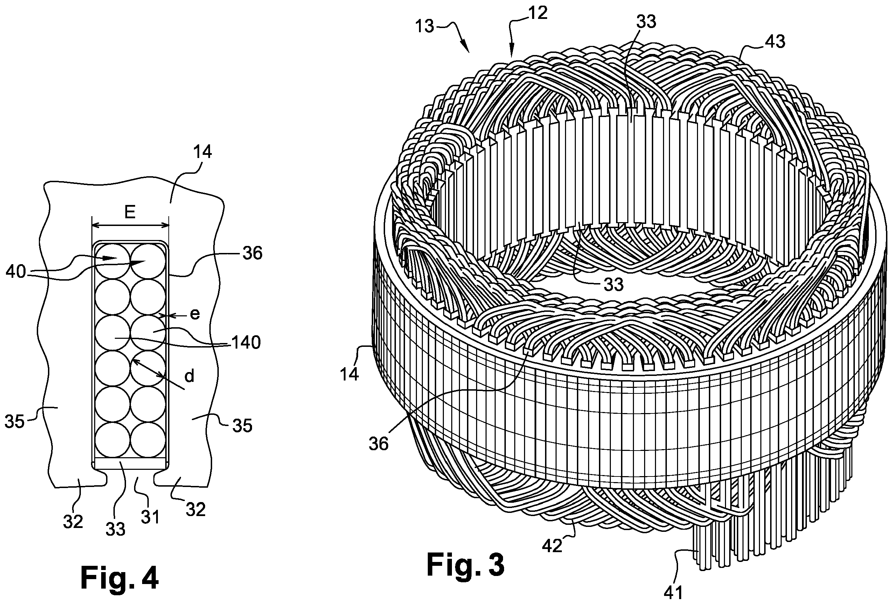

Dans le mode de réalisation de la figure 3 le stator 13 se monte en lieu et place du stator de la figure 1.
Il comporte de manière précitée un corps 14, en forme d'un paquet de tôles à encoches, dont une est visible en 30 à la figure 4. La référence 36 désigne l'isolant d'encoche précité. Les encoches 30, dans ce mode de réalisation, sont d'orientation radiale par rapport à l'axe de rotation de l'alternateur constitué par l'axe de l'arbre du rotor.

Le rotor associé à ce stator est un rotor à griffes à 12 pôles à raison de 6 pôles par roue polaire.

Le corps 14 comporte 72 encoches et le bobinage 12 six enroulements.
Les enroulements traversent le corps 14 à la faveur des encoches 30 de celui-ci et s'étendent de part et d'autre du corps 14 pour former un chignon avant 43 et un chignon arrière 42 destiné à être relié au dispositif de redressement de courant de la figure 1.
Le dispositif de redressement de courant comporte 12 éléments de redressement de courant tels que des diodes ou des transistors du type MOSFET.

L'alternateur ou l'alterno-démarreur est dans un mode de réalisation du type hexaphasé.
Les sorties des enroulements du bobinage 12 sont alors connectées par exemple en étoile.

L'alternateur ou l'alterno-démarreur est ici du type triphasé avec deux enroulements par phase. Ces enroulements sont dans un mode de réalisation connectés en série.
En variante ils sont connectés en série et/ou en parallèle à l'aide d'interrupteurs comme décrit dans le document US 3 793 544.
En variante les deux enroulements sont connectés en parallèle.
Les couplages des enroulements des phases peuvent être alors réalisés en étoile-étoile, en triangle-étoile ou en triangle- triangle comme dans le document US 3 793 544.
Dans la figure 3 chaque enroulement comporte deux fils continus 40 en parallèle, chaque fil comportant de manière précitée un conducteur électrique, par exemple en cuivre, recouvert d'au moins une couche d'isolant, tel que de l'émail. Une deuxième couche peut être prévue, en variante, pour solidariser les fils 40 à l'isolant d'encoche 36, qui dépasse de part et d'autre du corps 14 comme visible dans les figures 3, 5 et 6 pour protéger les fils lors de leur insertion dans les encoches 30.
La présence de deux fils continus en parallèle favorise la réalisation de l'enroulement ; les fils étant plus facile à déformer qu'un seul fil de plus grande section.
Dans la figure 3 on remarque 24 entrées et sorties 41, plus précisément 12 paires d'entrées et de sorties du fait que chaque enroulement comporte deux fils 40 en parallèle.
Cela provient du fait d'un couplage triangle- triangle en parallèle des enroulements.

Les entrées et les sorties 41 sont destinées à être reliées au dispositif de redressement de courant. Ces entrées et sorties appartiennent au chignon arrière 42.

Les fils 40 sont ici de section circulaire.
Le diamètre d'un fil, ici en cuivre, est compris entre 1 mm et 1,50mm, sachant que le fil est ici émaillé et que l'épaisseur de l'émail est très faible. Par exemple pour un fil de cuivre de 1,25 mm de diamètre, le diamètre total du fil en comptant l'émail est d'environ 1, 35 mm.
Pour mémoire on rappelera que le diamètre externe du corps d'un stator de véhicule automobile varie de 110 à 150mm et que le diamètre externe du rotor varie entre 78 mm et 112 mm.
Les isolants d'encoche 36 (figure 4) ont une faible épaisseur e, par exemple voisine de 0,1 mm en sorte que la largeur E de l'encoche 30 est globalement égale à deux fois le diamètre d d'un fil 40.

Ces encoches 30, du type semi-ouvert, ont globalement une forme rectangulaire avec deux bords latéraux parallèles, globalement d'orientation radiale, et un fond perpendiculaires. Une bande de matière, appelée culasse, existe entre le fond de l'encoche et la périphérie externe du corps 14. Les encoches présentent une fente 31 à la périphérie interne du corps 14.
Les encoches 30 et les fentes 31 sont en correspondance les unes avec les autres. Les fentes 31 alignées forment des rainures ici d'orientation axiale.
En variante les rainures peuvent être inclinées dans la direction axiale.

La largeur de la fente 31 est supérieure au diamètre d'un fil 40, mais inférieure à deux fois le diamètre d'un fil.
Ainsi il est possible de monter les fils 40 dans l'encoche avec un minium de jeu et de pertes de flux magnétique au niveau de la fente 31.
Les encoches 30 sont délimitées par des dents 35, chaque tôle du corps 14 comportant une alternance de dents et d'encoches.
Les dents 35 présentent un pied 32 saillant circonférentiellement en direction de la dent voisine. Les ouvertures 31 sont délimitées par les pieds 32.
Une cale 33 est en appui sur les pieds 32 à l'intérieur de l'encoche.
Chaque cale 33 s'étend sur toute la longueur axiale du corps 14 et présente deux extrémités saillantes (figure 3) par rapport au corps 14 pour maintien en position de la cale. La cale 33 est fine et est en matière électriquement isolante, telle que de la matière plastique.
La profondeur, ou hauteur radiale, de l'encoche 30 est un multiple du diamètre du fil 40, augmentée de l'épaisseur de la cale 33 et de la hauteur d'un pied 32 comme visible à la figure 4.
La cale maintien les fils 40 à l'intérieur de l'encoche et ferme l'ouverture 31. Les fils 40 sont ainsi bien rangés en final dans l'encoche après leur insertion radiale dans celle-ci.
Les fils sont alignés radialement dans les encoches selon deux rangées radiales, ici selon six couches de deux fils en parallèles.
Le taux de remplissage des encoches est ainsi maximal et est supérieur à 60%. Ce taux de remplissage est en variante augmenté en modifiant la section des fils. Par exemple en variante les fils sont de section carrée, dont les côtés sont égaux au diamètre d du fil de la figure 1. Avantageusement les coins du carré sont arrondis.
En variante la section des fils est de forme rectangulaire, ou elliptique ou autre. Les six couches correspondent à six tours ou spires du corps 14.

Dans cette figure 3, le bobinage 12, à deux fils continus 40 en parallèle, est du type ondulé et réparti pour un meilleur remplissage des encoches ; les fils 40 étant insérés de manière ondulée et répartie dans les encoches 30 du corps 14 pour réaliser d'abord un premier tour du corps 14 et former une première spire ; sachant qu'un tour du corps 14 correspond à une spire.
Ensuite on effectue de la même manière un second tour pour formation d'une seconde spire, mais ce en sens inverse. On répète ainsi de suite l'opération.
Après insertion des fils dans les encoches du corps 14, on trouve, en allant de l'extérieur, au niveau du fond des encoches 30, vers l'intérieur, au niveau des cales 33, une première spire comprenant une spire de chaque enroulement, puis une seconde spire en sens inverse identique à la première spire, puis une troisième spire, etc...
Les spires sont de longueur circonférentielle décroissante de l'extérieur vers l'intérieur.

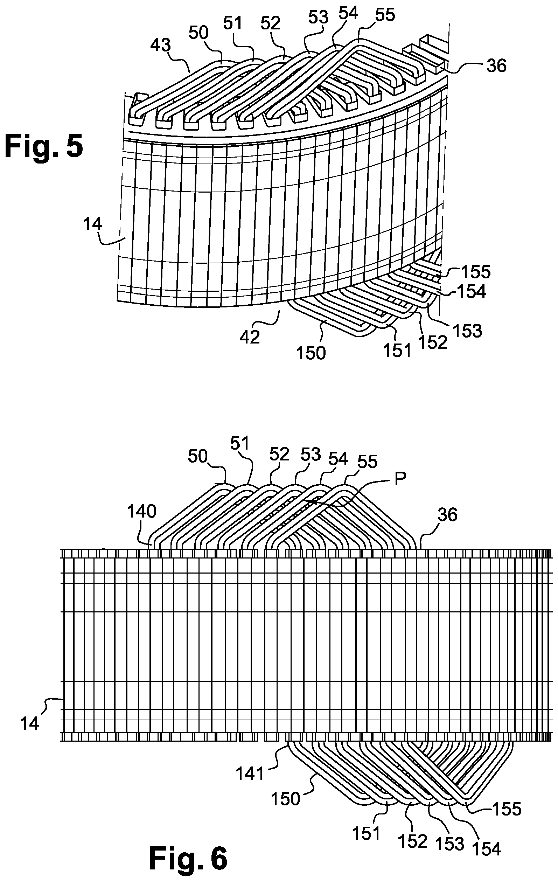

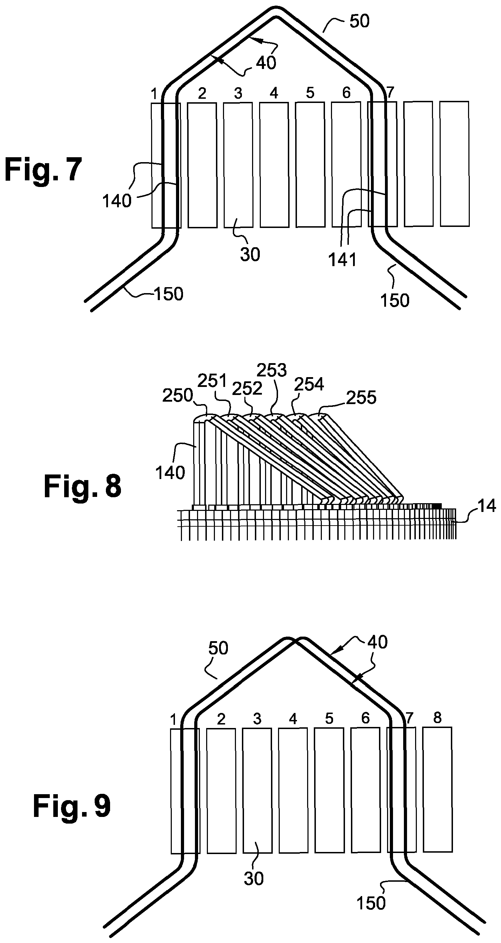

Plus précisément chaque spire, correspondant à un tour du corps 14, comprend une succession de séquence d'enroulements identique constituée d'une spire de chaque enroulement.
Le bobinage 12 est donc réalisé spire par spire ; une spire du bobinage 12 comprenant une spire de chaque enroulement.
Cette disposition permet de réduire les interférences entre les fils et procure un bon échange thermique ; les enroulements étant ventilés de manière homogène.
Cela permet également d'avoir une bonne surface d'échange thermique.
On voit dans les figures 5 et 6 une telle succession formant le motif du bobinage 12. ; la figure 7 représentant un tronçon de l'un des enroulements.

Chaque succession de séquence comporte ici six enroulements portés par le corps 14 du stator à la faveur des encoches de celui-ci.

Chaque enroulement comprend :
- une pluralité de paires de branches latérales 140, 141 (figure 7) en regard l'une de l'autre et destinées à être montées chacune dans une encoche 30 du corps 14 du stator 13 ;
- une pluralité de têtes de liaison 50 à 55 s'étendant à l'extérieur et d'un premier côté du corps du stator pour former un premier chignon 43 et relier entre elles les premières extrémités de chaque paire de branches latérales ;
- une pluralité de pieds de raccordement 150 à 155 décalée circonférentiellement par rapport à la pluralité de tête de liaison 50 à 55 et s'étendant à l'extérieur et d'un deuxième côté du corps du stator pour former un second chignon 42 et relier entre elles les secondes extrémités de chaque paire de branches latérales.
Ainsi chaque branche latérale 140, 141 est disposée dans une encoche écartée de l'autre encoche ici d'un pas polaire.
Bien entendu dans le mode de réalisation de la figure 3, dans laquelle les encoches 30 sont d'orientation radiale par rapport à l'axe de l'alternateur constitué par l'axe du rotor de l'alternateur, la longueur circonférentielle d'une tête ou d'un pied varie en fonction de la spire du bobinage 12 auquel appartient cette tête ou ce pied,
Ainsi les têtes et les pieds de la spire externe du bobinage 12 ont une longueur circonférentielle supérieure à celle des têtes et des pieds des autres spires du bobinage 12.

Dans la figure 7 on a représenté une paire de branches latérales 140, 141 reliées à l'une de ses extrémités à la tête de liaison 50 du premier enroulement et à l'autre de ses extrémités à deux pieds 150 de ce premier enroulement. La branche 140 est également visible à la figure 4 et est applicable aux autres enroulements.
La branche 140 est par exemple montée dans l'encoche 1 et la branche 141 dans l'encoche 7 comme indiqué à la figure 7, dans laquelle on a représenté par des rectangles les encoches 30.
Les deux fils 40 sont parallèles et ne se croisent pas au niveau des têtes et des pieds.
En variante, comme visible à la figure 9, les fils 40 se croisent au niveau des sommets des têtes et des pieds.
Entre ces deux encoches il y a présence de cinq autres encoches occupées chacune par l'une des branches latérale respectivement du deuxième enroulement à tête 51 de liaison et pied de raccordement 151, du troisième enroulement à tête 52 et pied 152, etc..
Le pas entre les encoches 1 et 7 est égal au pas polaire.
Ainsi les branches 140, 141 sont écartées circonférentiellement l'une de l'autre d'un pas polaire.
Les têtes et les pieds de chaque enroulement sont décalés, c'est-à-dire écartés, circonférentiellement d'un pas polaire.
Ainsi dans le chignon avant 43 les têtes 50 à 55 d'un succession de séquence ne sont pas alignées radialement mais décalées circonférentiellement les unes par rapport aux autres en sorte qu'elles permettent une circulation de l'air de refroidissement.

De même dans ce mode de réalisation dans le chignon arrière 42 les pieds 150 à 155 d'une succession de séquence ne sont pas alignées radialement mais décalées circonférentiellement les unes par rapport aux autres en sorte qu'ils permettent une circulation de l'air de refroidissement.

Cette configuration de succession de séquence de spire par spire permet de réduire les interférences entre les fils et procure un meilleur échange thermique ; les enroulements étant ventilés de manière homogène.

Suivant une caractéristique l'une au moins des pluralités de têtes de liaison et de pieds de raccordement a une forme globalement pointue et la longueur axiale de cette pluralité est comprise entre 15 et 20 mm.

Le sommet de la forme en pointe est arrondi.
Cette forme pointue est légèrement cintrée du fait des liaisons réalisées avec des branches latérales appartenant à des encoches différentes et du fait qu'une spire du bobinage 12 comprend une succession de spires des enroulements.

Dans un mode de réalisation la forme pointue, comme visible à la figure 8, est constituée par une partie d'orientation axiale prolongeant l'une des branches 140, 141 et par une partie inclinée reliant le sommet de la pointe à l'autre branche latérale. Cette partie inclinée est légèrement cintrée. Dans cette figure 8 les têtes 50 à 55 des figures 5 et 6 sont modifiées et portent les références 250 à 255 ; la branche 140 étant prolongée pour former l'un des côtés de la forme pointue à sommet arrondi.

Dans un autre mode de réalisation la forme pointue comporte deux parties inclinées en sens inverse, chaque partie étant raccordée à l'une des branches latérales et à l'autre partie inclinée. L'inclinaison des parties est dans un mode de réalisation différente en sorte que la forme pointue est globalement une forme de V non symétrique.

En variante la pointe est globalement en forme de V symétrique comme visible dans les figures 3, 5, 6 et 7. Le sommet du V est arrondi ainsi que les zones de raccordement des branches du V aux branches latérales. Le V est centré. Ce V est également légèrement cintré circonférentiellement. C'est cette disposition qui donne le meilleur résultat.

La forme pointue constitue donc dans les variantes décrites ci-dessus les deux côtés d'un triangle à sommet arrondi ; le troisième côté du triangle étant délimité globalement par le corps comme visible dans les figures 6 et 8.

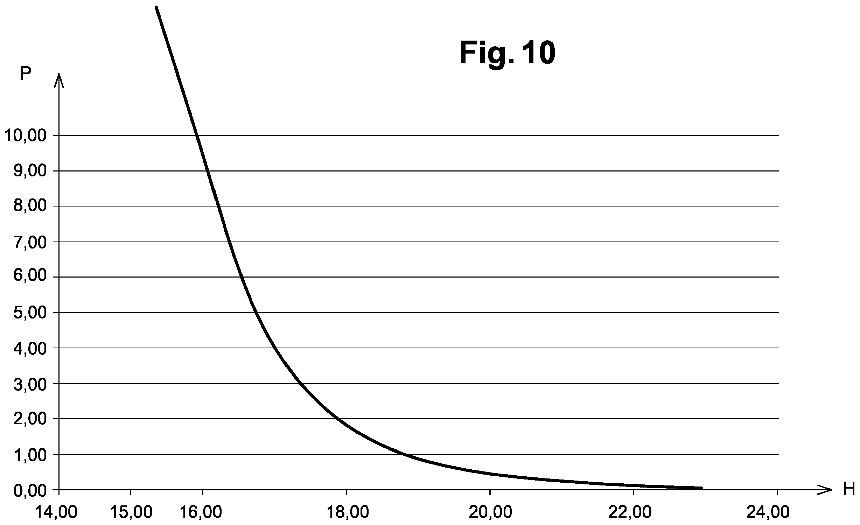

Dans un mode de réalisation le diamètre d'un fil 40 est compris entre 1 mm et 1, 7 mm.
En référence à la figure 3 et à la figure 10 on remarque que plus on diminue la longueur axiale du chignon plus on densifie celui-ci.
Plus précisément, le diamètre externe du corps 14 du stator étant compris entre 110 et 150 mm, on constate, avec le motif des figures 5 et 6 globalement symétrique, que pour une hauteur de chignon de 14 mm il y a un début d'interférence entre les fils 40 des pieds 150 à 155 ou des têtes 50 à 55 et que l'aération du chignon est réduite au minimum, voir nulle. La résistance du bobinage 12 est minimale.
Pour une hauteur de chignon de 20 mm on augmente l'aération du chignon sans interférence entre les fils, mais on obtient la limite du point de vue de la résistance électrique du chignon.

Pour un diamètre externe du corps 14 compris entre 130 mm et 150 mm on constate que la valeur optimale est globalement de 17 mm, la longueur du corps 14 étant comprise entre 30 et 42 mm.
On obtient une bonne aération sans interférence entre les fils, tout en ayant une bonne valeur de résistance du bobinage 12. La surface d'échange thermique est bonne. Elle est meilleure qu'avec des chignons de plus faible hauteur.
Plus précisément en se reportant aux figures 5 et 6 on voit que les paires de fils sont bien écartées les unes par rapport aux autres, l'écart étant repéré par la flèche P à la figure 6.

Plus on diminue la hauteur du chignon plus on rapproche les paires de fil les unes des autres. Plus on augmente la hauteur du chignon plus on écarte les paires de fil les unes des autres.

Dans la figure 10 on a représenté en abscisse la hauteur du chignon (H) concerné en mm et en ordonnée la perméabilité (P); l'indice 10 correspondant à une très grande imperméabilité et l'indice 0 à la perméabilité maximum (Maximum de passage d'air). Ainsi qu'il ressort de la courbe de la figure 7, pour un chignon de 14 mm de hauteur il se produit un début d'interférence entre les fils et l'aération du chignon est réduite au minimum. La courbe représentée représente donc la température en fonction de la hauteur du chignon et de la perméabilité.
En dessous de 14 mm on obtient de très mauvais résultats point de vue aération et donc de la température car on est en présence d'un mur, mais on diminue la résistance du chignon. Pour une valeur de 15 mm il y a un passage d'air de manière certaine et la résistance du bobinage est peu élevée. Plus on augmente la hauteur du chignon, plus on a un meilleur passage d'air mais on augmente également la résistance du bobinage.
Pour une valeur supérieure à 20mm du chignon on ne gagne pratiquement rien au niveau de l'aération et donc de la température.

Bien entendu la présente invention n'est pas limitée aux exemples de réalisation décrits.
Ainsi le bobinage peut être ondulé de manière simple. On réalise un bobinage en spirale, les spires étant de longueur circonférentielle décroissante de l'extérieur vers l'intérieur.
En variante les encoches 30 sont initialement ouvertes puis, après insertion des fils, refermées en partie pour formation d'encoches du type semi-fermé.
Cela est réalisé en déformant les extrémités internes des dents. Par exemple chaque dent présente à chacune de ses extrémités deux languettes initialement d'orientation radiale, que l'on replie, après insertion des fils, circonférentiellement pour former les pieds 32.

Bien entendu les bobinage 12 peut présenter des irrégularités au niveau de certaines encoches, notamment au niveau des entrées et des sorties 41.
Les fils 40 peuvent être mis en forme dans les zones de ces fils croisant d'autres fils. Par exemple les fils sont déformés localement, courbés ou torsionnés.
En variante le nombre d'enroulements est différent de six.
Ces enroulements sont agencés comme à la figure 3 pour être bobinés spire par spire.
Par exemple en variante il est prévu cinq enroulements et donc deux rangées de cinq fils dans les encoches. Le nombre de diodes ou de transistors du dispositif de redressement étant alors de dix.
Ce dispositif de redressement de courant peut avoir une configuration quelconque, qui dépend des applications. Il peut ne pas être porté par le palier arrière de l'alternateur, mais par exemple par une mezzanine comme décrit par exemple dans le document WO 2004/040738. En variante il est déporté.
De même le nombre de dents de chaque roue polaire dépend des applications et peut varier de 6 à 8 de manière précitée.
L'un des paliers 15, 16 de l'alternateur peut être refroidit par circulation d'un liquide, l'autre ventilé. L'alternateur est en variante sans balais.
En variante il est prévu deux rangées de deux fils dans les encoches comme décrit par exemple dans le document WO 92/06527.
En se référant par exemple à la figure 2 de celui-ci on voit qu'en variante le
bobinage du stator est constitués de segments conducteurs en forme d'épingles avec des têtes continues et des pieds en deux parties reliées entre eux par exemple par soudage.
Dans la figure 3, les têtes ou les pieds peuvent être en deux parties appartenant chacune à un segment conducteur.
En variante seul l'un des chignons présente les caractéristiques de dimension selon l'invention.

Les chignons 42, 43, dans un mode de réalisation, sont de longueur axiale identique. En variante les longueurs des chignons 42, 43 sont différentes. Par exemple en variante le chignon arrière 42 est plus long que le chignon avant 43.
Néanmoins les deux chignons 42, 43 peuvent respecter les caractéristiques de longueur selon l'invention.
Le chignon arrière 42, par exemple peut avoir une longueur proche des 20 mm, tandis que le chignon avant 43 a une longueur proche de 17 mm en étant ainsi moins perméable que le chignon arrière 42. L'inverse est possible.
Le rotor est en variante à pôles saillants et en variante peut comporter des aimants permanents comme dans le document WO 02/054566.

## Revendications

1. Stator polyphasé pour machine électrique tournante à ventilation interne, telle qu'un alternateur ou un alterno-démarreur de véhicule automobile, du type comportant un corps (14) doté d'encoches (30), le stator comportant 72 encoches et 6 enroulements, le diamètre externe du corps (14) étant compris entre 110 et 150 mm, et portant un bobinage (12) de stator comportant au moins un enroulement par phase, chaque enroulement comportant deux fils continus (40) en parallèle, chaque enroulement comprenant :
- une pluralité de paires de branches latérales (140, 141) en regard l'une de l'autre et destinées à être montées chacune dans une encoche (30) du corps (14) du stator (13) ;
- une pluralité de têtes de liaison (50 à 55) s'étendant à l'extérieur et d'un premier côté du corps du stator pour former un premier chignon (43) et relier entre elles les premières extrémités de chaque paire de branches latérales ;
- une pluralité de pieds de raccordement (150 à 155), décalée circonférentiellement par rapport à la pluralité de têtes de liaison et s'étendant à l'extérieur et d'un deuxième côté du corps du stator pour former un deuxième chignon (42) et relier entre elles les deuxièmes extrémités de chaque paire de branches latérales,
**caractérisé en ce qu'** au moins l'une des pluralités des têtes de liaison et des pieds de raccordement a globalement une forme pointue, constituée de deux côtés d'un triangle à sommet arrondi, le troisième côté du triangle étant délimité globalement par le corps (14), et **en ce que** la longueur axiale ou la hauteur de cette pluralité des têtes de liaison et des pieds de raccordement est comprise entre 15 et 20 mm.

2. Stator selon la revendication 1, **caractérisé en ce que** la pluralité de têtes de liaison a une longueur identique à la pluralité de pieds de raccordement.

3. Stator selon la revendication 1, **caractérisé en ce que** la pluralité de têtes de liaison a une longueur différente de la pluralité des pieds de raccordement.

4. Stator selon l'une quelconque des revendications précédentes, caractérisé en ce l'une au moins des pluralités des têtes de liaison et des pieds de raccordement a globalement une forme de V symétrique.

5. Stator selon l'une quelconque des revendications précédentes **caractérisé en ce que** les branches latérales (140, 141) sont montées dans des encoches (30) écartées circonférentiellement l'une de l'autre d'un pas polaire.

6. Stator selon la revendication 5, **caractérisé en ce que** les têtes et les pieds des enroulements sont décalés circonférentiellement d'un pas polaire.

7. Stator selon l'une quelconque des revendications précédentes, **caractérisé en ce que** le bobinage (12) comporte au moins un chignon (42, 43) comportant une succession d'enroulements décalés dans le sens circonférentiel de séquence identique.

8. Stator selon l'une quelconque des revendications précédentes, **caractérisé en ce que** les encoches (30) ont globalement une forme rectangulaire.

9. Stator selon l'une quelconque des revendications précédentes, **caractérisé en ce que** les fils sont des fils ronds.

10. Stator selon la revendication 9, **caractérisé en ce que** l'encoche a une largeur circonférentielle égale à au moins deux diamètres de fil.

11. Stator selon l'une quelconque des revendications 1 à 8, **caractérisé en ce que** les fils sont des fils globalement de forme rectangulaire, telle que carrée.

12. Machine électrique tournante à ventilation interne, notamment alternateur ou alterno-démarreur de véhicule automobile, **caractérisée en ce qu'**elle est équipée d'un stator polyphasé selon l'une quelconque des revendications précédentes.

## Patentansprüche

1. Mehrphasiger Stator für eine intern belüftete elektrische rotierende Maschine, wie einen Wechselstromgenerator oder einen Startergenerator eines Kraftfahrzeugs, umfassend einen Körper (14), der mit Kerben (30) versehen ist, wobei der Stator 72 Kerben und 6 Wicklungen umfasst, wobei der Außendurchmesser des Körpers (14) zwischen 110 und 150 mm beträgt, und umfassend eine Statorwicklung (12), umfassend mindestens eine Wicklung pro Phase, wobei jede Wicklung zwei parallele durchgehende Drähte (40) umfasst, wobei jede Wicklung umfasst:
- eine Vielzahl von Seitenschenkelpaaren (140, 141), die einander gegenüberliegen und dazu bestimmt sind, jeweils in einer Kerbe (30) des Körpers (14) des Stators (13) montiert zu sein;
- eine Vielzahl von Verbindungsköpfen (50 bis 55), die sich außerhalb und auf einer ersten Seite des Körpers des Stators erstrecken, um einen ersten Knoten (43) zu bilden und die ersten Enden jedes Seitenschenkelpaars miteinander zu verbinden;
- eine Vielzahl von Anschlussfüßen (150 bis 155), die in Umfangsrichtung in Bezug zu der Vielzahl von Verbindungsköpfen versetzt ist und sich außerhalb und auf einer zweiten Seite des Körpers des Stators erstreckt, um einen zweiten Knoten (42) zu bilden und die zweiten Enden jedes Seitenschenkelpaars miteinander zu verbinden,
**dadurch gekennzeichnet, dass** mindestens eine der Vielzahlen von Verbindungsköpfen und Anschlussfüßen global eine spitze Form hat, die von zwei Seiten eines Dreiecks mit abgerundeter Spitze gebildet ist, wobei die dritte Seite des Dreiecks global vom Körper (14) begrenzt ist, und dass die axiale Länge oder die Höhe dieser Vielzahl von Verbindungsköpfen und Anschlussfüßen zwischen 15 und 20 mm beträgt.

2. Stator nach Anspruch 1, **dadurch gekennzeichnet, dass** die Vielzahl von Verbindungsköpfen eine identische Länge wie die Vielzahl von Anschlussfüßen hat.

3. Stator nach Anspruch 1, **dadurch gekennzeichnet, dass** die Vielzahl von Verbindungsköpfen eine andere Länge als die Vielzahl von Anschlussfüßen hat.

4. Stator nach einem der vorhergehenden Ansprüche, **dadurch gekennzeichnet, dass** mindestens eine der Vielzahlen von Verbindungsköpfen und Anschlussfüßen global eine Form eines symmetrischen V hat.

5. Stator nach einem der vorhergehenden Ansprüche, **dadurch gekennzeichnet, dass** die Seitenschenkel (140, 141) in Kerben (30) montiert sind, die in Umfangsrichtung um einen Polabstand voneinander entfernt sind.

6. Stator nach Anspruch 5, **dadurch gekennzeichnet, dass** die Köpfe und Füße der Wicklungen in Umfangsrichtung um einen Polabstand voneinander entfernt sind.

7. Stator nach einem der vorhergehenden Ansprüche, **dadurch gekennzeichnet, dass** die Wicklung (12) mindestens einen Knoten (42, 43) umfasst, der eine Aufeinanderfolge von in Umfangsrichtung mit identischer Sequenz versetzten Wicklungen umfasst.

8. Stator nach einem der vorhergehenden Ansprüche, **dadurch gekennzeichnet, dass** die Kerben (30) eine global rechteckige Form haben.

9. Stator nach einem der vorhergehenden Ansprüche, **dadurch gekennzeichnet, dass** die Drähte Runddrähte sind.

10. Stator nach Anspruch 9, **dadurch gekennzeichnet, dass** die Kerbe eine Umfangsbreite gleich mindestens zwei Drahtdurchmesser hat.

11. Stator nach einem der Ansprüche 1 bis 8, **dadurch gekennzeichnet, dass** die Drähte Drähte von global rechteckiger, wie beispielsweise quadratischer Form sind.

12. Intern belüftete elektrische rotierende Maschine, insbesondere Wechselstromgenerator oder Startergenerator eines Kraftfahrzeugs, **dadurch gekennzeichnet, dass** sie mit einem mehrphasigen Stator nach einem der vorhergehenden Ansprüche ausgestattet ist.

## Claims

1. Polyphase stator for an internally ventilated rotary electrical machine, such as a motor vehicle alternator or alternator-starter, of the type comprising a body (14) provided with slots (30), the stator comprises 72 slots and six windings, the external diameter of the body (14) being comprised between 110 and 150 mm, and bearing a stator coil (12) comprising at least one winding per phase, each winding comprising two continuous wires (40) in parallel, each winding comprising:
- a plurality of pairs of lateral branches (140, 141) facing one another and each intended to be mounted in a slot (30) of the body (14) of the stator (13);
- a plurality of winding heads (50 to 55) extending on the outside and at one first end of the stator body to form a first winding overhang (43) and connect together the first ends of each pair of lateral branches;
- a plurality of winding heels (150 to 155) which is circumferentially offset from the plurality of winding heads and extends on the outside and at a second end of the stator body to form a second winding overhang (42) and connect together the second ends of each pair of lateral branches,
**characterized in that** at least one of the plurality of winding heads and winding heels has a pointed overall shape made up of two sides of a triangle with a rounded vertex, the third side of the triangle being delimited overall by the body (14), and **in that** the axial length or the height of this plurality of winding heads and winding heels is comprised between 15 and 20 mm.

2. Stator according to Claim 1, **characterized in that** the plurality of winding heads has an identical length to the plurality of winding heels.

3. Stator according to Claim 1, **characterized in that** the plurality of winding heads has a different length from the plurality of winding heels.

4. Stator according to any one of the preceding claims, **characterized in that** at least one of the pluralities of winding heads and winding heels has the overall shape of a symmetrical V.

5. Stator according to any one of the preceding claims, **characterized in that** the lateral branches (140, 141) are mounted in slots (30) which are circumferentially distant from one another by one pole pitch.

6. Stator according to Claim 5, **characterized in that** the heads and the heels of the windings are circumferentially offset by one pole pitch.

7. Stator according to any one of the preceding claims, **characterized in that** the coil (12) comprises at least one winding overhang (42, 43) comprising a succession of windings offset in the circumferential direction in identical sequence.

8. Stator according to any one of the preceding claims, **characterized in that** the slots (30) have a rectangular shape overall.

9. Stator according to any one of the preceding claims, **characterized in that** the wires are round wires.

10. Stator according to Claim 9, **characterized in that** the slot has a circumferential width equal to at least two diameters of wire.

11. Stator according to any one of Claims 1 to 8, **characterized in that** the wires are wires of rectangular, such as square, overall shape.

12. Internally ventilated rotary electrical machine, notably motor vehicle alternator or alternator-starter, **characterized in that** it is equipped with a polyphase stator according to any one of the preceding claims.
